# EUROPÄISCHE PATENTSCHRIFT

(11) **EP 1 044 356 B1**
(45) Veröffentlichungstag und Bekanntmachung des Hinweises auf die Patenterteilung: **22.12.2004**
(21) Anmeldenummer: 99945826.8
(22) Anmeldetag: 04.10.1999
(51) Int. Cl.: G01L 1/10, G01L 5/00, G01G 3/16

(54) **KRAFTMESSZELLE**
FORCE MEASURING CELL
DYNAMOMETRE

(30) Priorität: 30.10.1998 CH 219498
(43) Veröffentlichungstag der Anmeldung: 18.10.2000
(73) Patentinhaber: Digisens AG, 3280 Murten (CH)
(72) Erfinder: LUSTENBERGER, Martin, CH-1752 Villars-sur-Glâne (CH); WIRTH, Johannes, CH-8032 Zürich (CH)
(74) Vertreter: Salgo, Reinhold Caspar, Dr.
(86) Internationale Anmeldenummer: PCT/CH1999/000467
(87) Internationale Veröffentlichungsnummer: WO 2000/003218

(56) Entgegenhaltungen:
- EP-A- 0 402 320
- WO-A-93/00575
- US-A- 3 906 788

## Beschreibung

Die vorliegende Erfindung betrifft eine Kraftmesszelle nach dem Oberbegriff des Patentanspruches 1 (EP-A1-675 032). Insbesondere betrifft sie Kraftmesszellen, bei denen der Messwandler in einem runden Loch einer Platte oder eines Steges in einem Träger eingesetzt ist, wobei die Achse des Loches senkrecht zur Lastrichtung und parallel zur neutralen Fläche der Platte oder des Trägers angebracht ist.

Solche Kraftmesszellen sind mehrere bekannt, so z.B. aus GB-A 1,518,359 (D1), EP-A1 0 675 032 (D2), US 3,132,319 (D3), US 4,530,245 (D4), EP-A1 0 129 331 (D5), US 3,906,788 (D6).

Gemeinsames Merkmal aller genannten Veröffentlichungen ist die Verwendung von Dehnmessstreifen (DMS) als analoge Messwandler, die in bekannter Weise in Brückenschaltungen verbunden sind. In D1 ist der Messwandler in das Loch eingeklebt, in D3, D4, D5 wird er in axialer Richtung eingepresst, nur in D2 und D6 sind definierte Kontakt-Punkte oder -Linien vorgesehen.

Während D2 mit der Wirkung des Kompressionskegels arbeitet und daher konsequenterweise nur als Eisenbahnachszähler eingesetzt wird, wird in D3, D5, D6 die an einem stab- oder plattenförmigen Element anliegende Zugspannung gemessen in Funktion der Formänderung des Loches parallel oder senkrecht zur wirkenden Last.

Durch die Art der Einpassung der DMS-Messwandler in das Loch sind, sofern die bekannten Vorrichtungen zur Kraftmessung verwendet werden sollen, - mit Ausnahme von D2 und D6 - nur verhältnismässig bescheidene Genauigkeiten, zusammengesetzt aus Auflösung und Reproduzierbarkeit, zu erwarten. Ein Ersatz eines defekten eingepressten oder -geklebten Messwandlers ist schwierig und aufwendig und zieht allenfalls Nachbearbeitung des Loches nach sich. Dies in Verbindung mit den bekannten Einschränkungen von DMS wie Temperaturabhängigkeit, Feuchtigkeitsempfindlichkeit und unterschiedliche Qualiät der Klebstellen mit plötzlichen, alterungsabhängigen Ausfällen, besonders bei rauhem Betrieb.

Bei Verwendung solcher Messzellen als Eisenbahnwaagen, bei denen die Träger, deren Verformung gemessen werden soll, ja die Eisenbahnschienen sind, kann bei Verwendung von DMS noch eine nicht zu unterschätzende Problematik eintreten: Werden die DMS direkt auf einen Teil einer solchen Schiene angebracht, so wird es nahezu ausgeschlossen sein, bei einer bereits verlegten Schiene die Bedingungen von Feuchtigkeit, Sauberkeit und Temperatur reproduzierbar herbeizuführen, die für das Aufkleben von DMS erforderlich sind. Als Alternative bleibt dann das Heraustrennen und Wiedereinschweissen eines Schienenstückes, was die Herstellung einer solchen Waage enorm teuer macht. Zudem muss bei einem eventuellen Ausfall eines DMS die ganze Prozedur wiederholt werden.

Die Aufgabe der vorliegenden Erfindung ist die Schaffung einer Messzelle für Kräfte, die einfach und kostengünstig hergestellt werden kann, hohe Genauigkeit der Messwerte ermöglicht, hohe Widerstandsfähigkeit auch bei rauhem Betrieb aufweist und mit nur kleinem Aufwand eingesetzt und allenfalls ausgewechselt werden kann.

Die Lösung der gestellten Aufgabe ist wiedergegeben im Patentanspruch 1 hinsichtlich der wesentlichen Merkmale, in den davon abhängigen Patentansprüchen hinsichtlich weiterer vorteilhafter Ausbildungen.

Anhand der beigegebenen Zeichnungen wird der Erfindungsgegenstand näher erläutert. Es zeigen
- Fig. 1: ein Aufriss als Prinzipdarstellung der Funktionsweise der Messzelle,
- Fig. 2: eine Variante zur Messzelle von Fig. 1,
- Fig. 3a,b,c: eine Dreiseitenansicht eines ersten Ausführungsbeispieles,
- Fig.: ein Einbaudetail,
- Fig. 5: ein zweites Ausführungsbeispiel,
- Fig. 6: ein drittes Ausführungsbeispiel,
- Fig. 7: ein viertes Ausführungsbeispiel,
- Fig. 8: ein fünftes Ausführungsbeispiel,
- Fig. 9: ein sechstes Ausführungsbeispiel,
- Fig. 10: eine bevorzugte Ausführungsform einer Abdeckung.

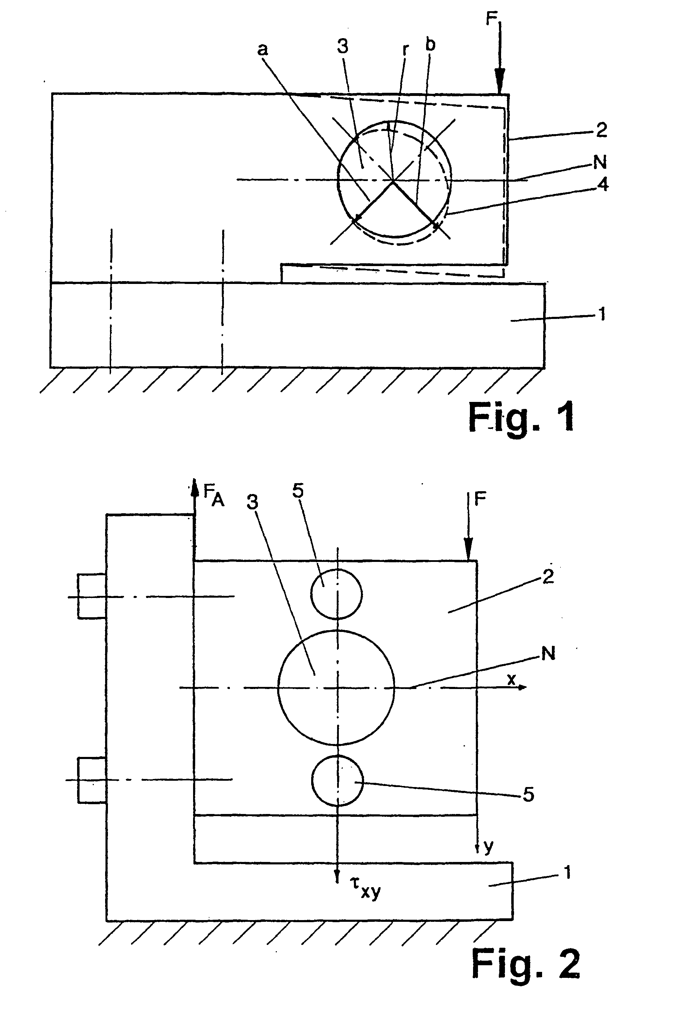

Fig. 1 ist eine schematische Prinzipdarstellung der Messzelle ohne den Messwandler. Eine Basis 1 trägt eine auskragende rechteckige Platte 2 mit einem im wesentlichen in der Mitte angebrachten kreisrunden Loch 3. Wirkt nun auf die Oberkante der Platte 2 eine als an einem Punkt 7 als Punktlast gedachte Kraft F, so wird sich die Platte 2 unter Aufbau von Schubspannung parallelogrammartig verformen. Die technischen Ausbildungen solcher Krafteinleitungen sind an sich bekannt und werden daher nicht weiter erläutert. Dabei erfährt das kreisrunde Loch 3 ebenfalls eine Verformung und wird zu einer Ellipse 4, deren kleiner Halbmesser b kleiner, deren grosser Halbmesser a grösser wird als der Radius r des Loches 3. Die Richtungen der Halbmesser a, b ist im wesentlichen um 45° gegenüber der Richtung der neutralen Faser N der Platte 2 geneigt, wobei die Richtung der Kraft F im wesentlichen senkrecht auf der neutralen Faser N steht. Entscheidend für das Entstehen der genannten elliptischen Verformung des Loches 3 ist also der Aufbau von Schubspannung in der Platte 2, deren Auftreten durch die an ihr angreifende Querkraft bewirkt wird.

Wird die Platte 2 - oder ein Träger, dessen Steg ausgebildet ist, wie die Platte 2 - unter dem der Basis abgewandten, also dem freien Ende unterstützt, so erfährt die Platte 2 zwar ein Biegemoment, und die Querkraft wird nach Massgabe der Abstandsverhältnisse reduziert, wie an sich bekannt, jedoch ändert sich an der Verformung des Loches 3 prinzipiell nichts, ausser deren Ausmass. Dies gilt auch dann, wenn die Platte 2 - oder der Träger, dessen Steg die Platte 2 darstellt - am anderen Ende ebenfalls in eine nicht verdrehbare Basis 1 eingespannt ist. Anstelle eines zweiseitig eingespannten Trägers ist auch ein sog. durchlaufender Träger als Teil der erfindungsgemässen Messzelle im Sinne der Erfindung. Eine Variante zu Fig. 1 ist in Fig. 2 dargestellt. Oberhalb und unterhalb des Loches 3 weist die Platte 2 je ein zusätzliches Loch 5 auf; beide Löcher 5 liegen in Richtung der Schubspannungskomponente τ_{xy} oberhalb und unterhalb des Zentrums des Loches 3. Damit wird insgesamt eine Schwächung des Plattenquerschnittes bewirkt und damit eine Vergrösserung des Verhältnisses E = a/b der aus dem kreisrunden Loch 3 entstehenden Ellipse 4. Immer noch ist dieses Verhältnis E = a/b invariant in Bezug auf den Ort der Einleitung der Kraft F, solange dieser zwischen dem Durchstosspunkt der Tensorkomponente τ_{xy} durch die Oberkante der Platte und deren äusserem Ende liegt; dies aus dem Grunde, dass die Querkraft Q_{y} = F, weil keine weitere Kraftableitung vorhanden ist, ausser der Auflagerreaktion F_{A} = -F. Selbstverständlich kann auch nur ein einziges Loch 5 oder auch mehr als deren zwei vorhanden sein, ohne den Sinn dieser Erfindungsvariante zu verlassen.

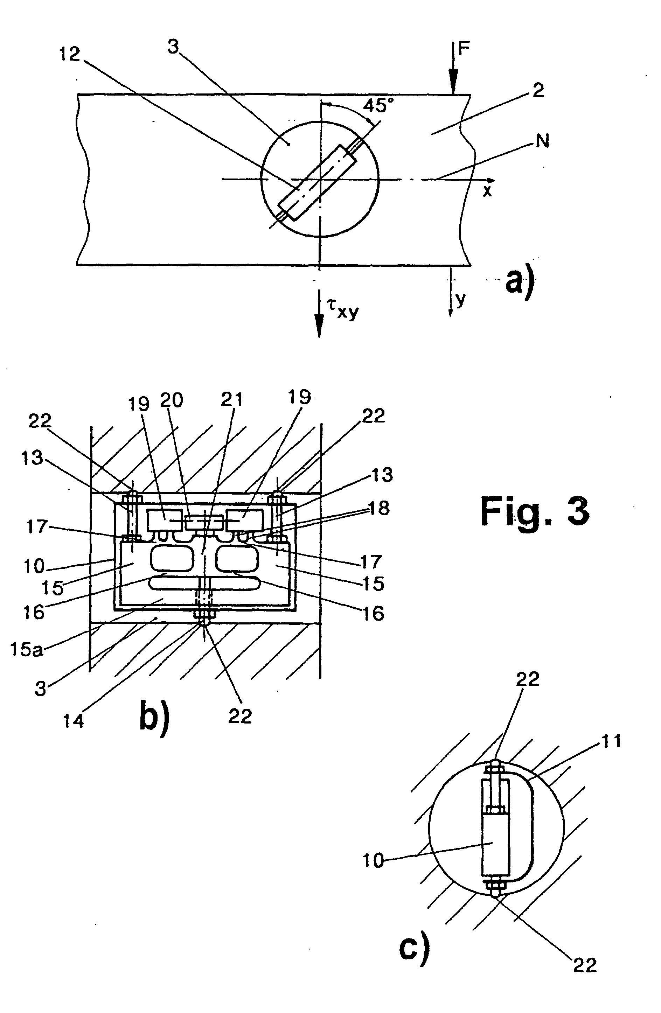

Als Messwandler ist erfindungsgemäss ein Schwingsaiten-Messwandler vorgesehen, der an sich bekannt ist, beispielsweise aus CH 672 841. Für dessen Einbau bestehen verschiedene Vorschläge bzw. Varianten: Eine erste Variante ist in Fig. 3a, b, c dargestellt.

Fig. 3 zeigt schematisch eine Messanordnung 12 bezüglich des Loches 3. Diese ist so eingesetzt, dass ihre Kraft- bzw. Wegmessrichtung unter im wesentlichen 45° steht sowohl bezüglich der Tensorkomponente τ_{xy} als auch der Richtung der neutralen Faser N. Diese Einbaurichtung gilt für alle folgenden Beispiele so, wir in Fig. 3a gezeigt, oder orthogonal dazu. Im ersten genannten Fall wird die Richtung der Verkürzung, im zweiten Fall jene der Verlängerung des Durchmessers des Loches 3 gemessen. Die folgenden Figuren sind jeweils Schnitte bzw. Draufsichten in der beschriebenen 45°-Ebene.

In Fig. 3b ist die Platte 2 so dick gewählt, dass ein Schwingsaiten-Messwandler 10 gemäss CH 672 841 direkt eingebaut werden kann.

Der nachfolgend beschriebene Schwingsaiten-Messwandler 10 ist Stand der Technik. Er weist drei Krafteingänge 13, 14 auf:

Die beiden Krafteingänge 13 wirken auf zwei aussenliegende unbewegliche Stützen 15, an welchen vier Blattfedern 16, 17 angelenkt sind und welche durch eine Basis 15a verbunden werden. Die in der Zeichnung oben liegenden Blattfedern 17 tragen auf je zwei Stützen 18 je einen Saitenkopf 19 für die Befestigung und das Spannen einer Saite 20.

Der dritte Krafteingang 14 wirkt direkt auf ein Mittelstück 21, an welchem die Blattfedern 16, 17 angelenkt sind. Wird der untere Krafteingang 14 relativ zu den oberen Krafteingängen 13 bewegt, so wird die Spannung und damit die Frequenz der Saite 20 erhöht oder gesenkt, je nach der Richtung der relativen Bewegung.

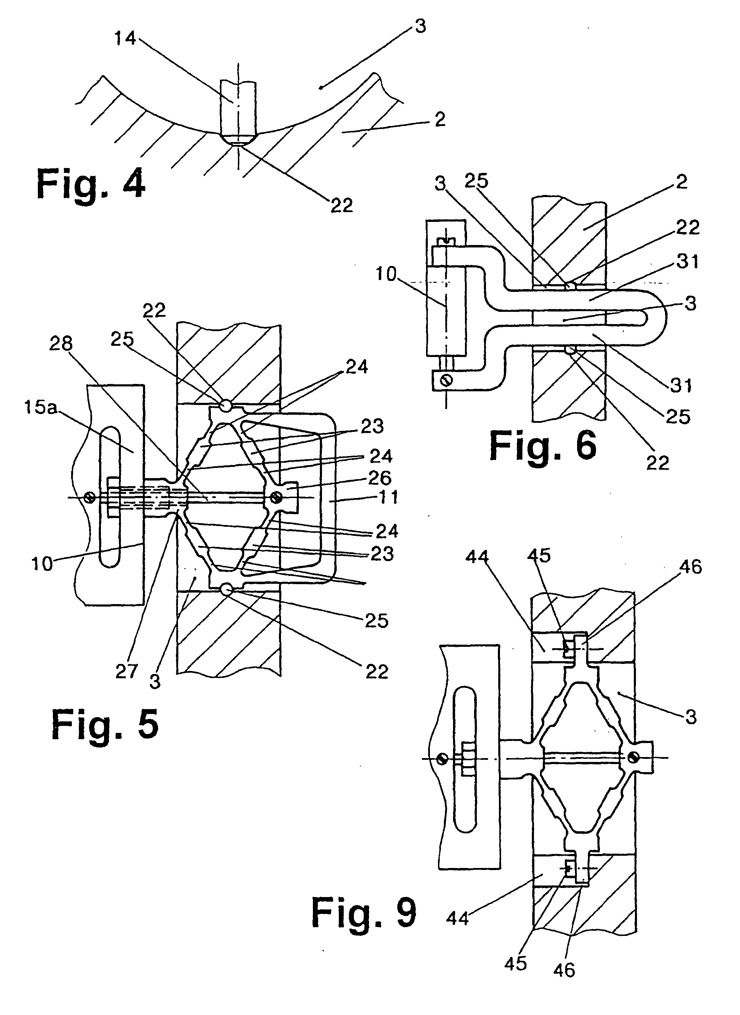

Die Krafteingänge 13, 14 sind in geeignete Vertiefungen 22 im Loch 3 eingelassen, wie anschliessend in Fig. 4 gezeigt.

Um den Anpressdruck der Krafteingänge 13, 14 zu erhöhen und hysteresefreien Sitz zu gewährleisten, ist - wie in Fig. 3c gezeigt - eine C-förmige Vorspannfeder 11 vorgesehen, die die Krafteingänge 13, 14 in die Vertiefungen 22 drückt, oder allenfalls über Reibungskräfte.

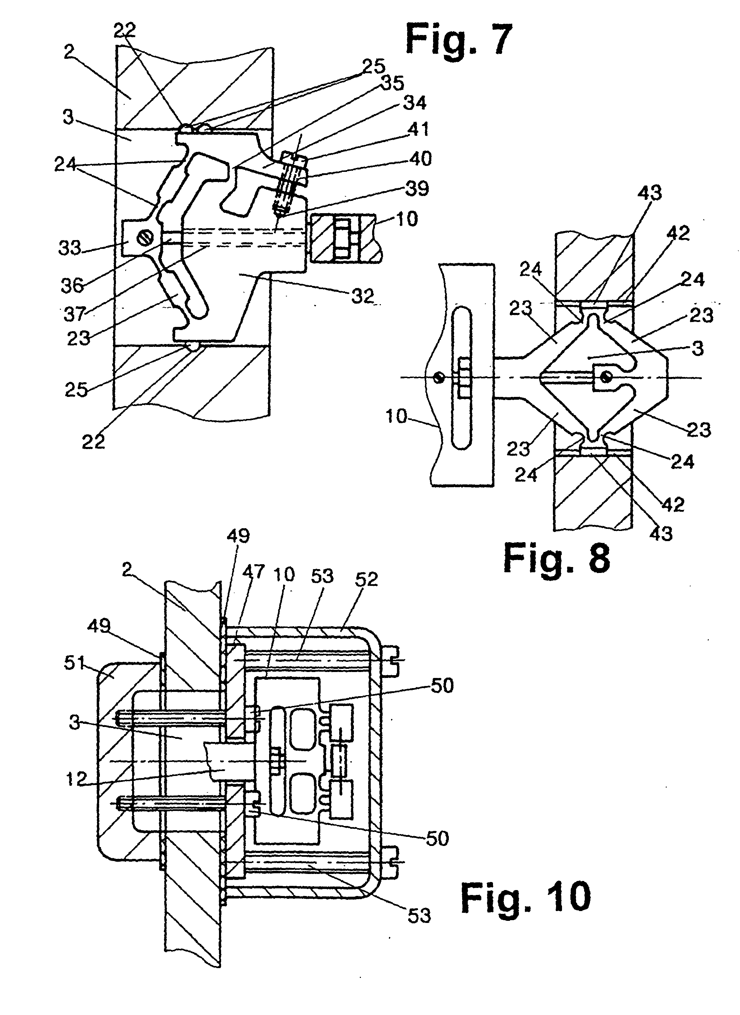

Abdeckungen, Kabelzuführungen, elektronische Vorrichtungen, die zu dieser Messanordnung gehören, sind hier weggelassen; ein Ausführungsbeispiel hiezu zeigt Fig. 10.

Fig. 4 zeigt eine solche Vertiefung 22 im Schnitt. Beispielsweise mit Hilfe eines geeigneten Prägewerkzeuges wird die Vertiefung 22 als Kugelkalotte radial in der Wandung des Loches 3 in der Platte 2 angebracht. Die Krafteingänge - dargestellt ist der Krafteingang 14 - weisen beispielsweise ein kegelstumpfförmiges Ende auf, das spielfrei in die Vertiefung 22 hineinpasst.

Die Ausführungsbeispiele gemäss Fig. 5, 6 sind besonders geeignet für die Fälle, wo entweder die Platte 2 zu dünn oder/und das Loch 3 zu klein ist für den direkten Einbau eines Schwingsaiten-Messwandlers gemäss Fig. 3a, b, c, ohne jedoch die beschriebene Einbauart auf diese Fälle zu beschränken.

In Fig. 5 wird die Aenderung der gewählten Dimension des Loches 3 übertragen auf ein Parallelogramm aus vier Stäben 23. An ihren Enden weisen diese Stäbe 23 je ein Biegegelenk 24 auf. Diese sind angeschlossen an zwei Krafteingänge 25, die ausgestaltet sind gemäss Fig. 4. Wie schon in Fig. 3c gezeigt, werden auch diese Krafteingänge 25 mit einer Vorspannfeder 11 in die Vertiefungen 22 gedrückt. Zwei der Stäbe 23 sind mit Biegegelenken 24 an einem ersten Knoten 26 angeschlossen, die anderen in gleicher Weise an einem zweiten Knoten 27. Dieser letztere ist rohrförmig ausgebildet und mit der Basis 15a des Schwingsaiten-Messwandlers verbunden. Das Mittelstück 21 des Schwingsaiten-Messwandlers 10 ist durch eine Stange 28 mit dem ersten Knoten 26 verbunden und überträgt so dessen Bewegung auf den Schwingsaiten-Messwandler 10. Eine Verkleinerung des Durchmessers des Loches 3 spreizt das genannte Parallelogramm und führt zu einer Senkung von Saitenspannung und -Frequenz, eine Vergrösserung zu deren Erhöhung. Wird das Parallelogramm der vier Stäbe 23 sehr hoch gewählt gegenüber seiner Breite (in Richtung der Stange 28), so resultiert daraus eine entsprechende Vergrösserung des Messweges, gegeben durch die Trigonometrie der Winkelverhältnisse, wie bekannt.

In Fig. 6 wird die Deformation des Loches 3 auf eine elastische Spange 30 übertragen, die nun ihrerseits mit zwei Krafteingängen 25 versehen ist, analog zum Ausführungsbeispiel von Fig. 5. In der Fig. 6 weist die Spange 30 einen oberen und einen unteren Schenkel 31 auf, auf denen die genannten Krafteingänge 25 angebracht sind. Gegen das offene Ende der Spange 30 sind die Schenkel 31 beispielsweise abgekröpft und tragen an ihren Enden den Schwingsaiten-Messwandler 10. Zum Einsetzen der Spange 30 in die Vertiefungen 22 im Loch 3, kann sie mit einem geeigneten Werkzeug zusammengedrückt und eingesetzt werden, worauf man die Spange 30 sich wieder entspannen lässt, bis die Krafteingänge 25 in die Vertiefungen 22 eingreifen. Auch hier wird eine Wegübersetzung der Deformation des Loches 3 erzeugt; zugleich übernimmt die Spange 30 den nötigen Anpressdruck der Krafteingänge 25 in den Vertiefungen 22.

Anstelle des elastischen Parallelogramms von Fig. 5 sind auch andere Lösungen möglich und erfinderisch. Eine solche Lösung ist in Fig. 7 dargestellt: Die Wegübersetzung besteht hier aus zwei Stäben 23; jeder Stab 23 ist mit je einem Biegegelenk 24 an einem Einsatz 32 angelenkt, mit dem je anderen wird ein dem ersten Knoten 26 aus Fig. 5 analoger Knoten 33 getragen. Der in Fig. 7 obere Teil des Einsatzes 32 ist als Hebel 34 ausgebildet, der in einem weiteren Biegegelenk 35 elastisch gelagert ist und an seinem das eine Biegegelenk 24 des einen Stabes 23 tragenden Ende einen der Krafteingänge 25 trägt. Der andere Krafteingang 24 ist am in Fig. 7 unteren Teil des Einsatzes 32 angebracht, wo auch das andere Biegegelenk 24 des anderen Stabes 23 mündet.

Im Knoten 33 ist eine Stange 36 befestigt, die durch ein Loch 37 im Einsatz 32 hindurch die Bewegung des Knotens auf den Schwingsaiten-Messwandler 10 überträgt.

Der hintere, dem Krafteingang 25 abgewandte Teil des Hebels 34 weist eine Bohrung 40 auf, durch welche eine Schraube 41 läuft, die in ein Gewinde 39 im mittleren Teil des Einsatzes 32 eingreift. Mit Hilfe dieser Schraube 41 kann die Anpresskraft der Krafteingänge 25 in den Vertiefungen 22 und damit die Vorspannung des Schwingsaiten-Messwandlers 10 eingestellt werden.

Wie ferner in Fig. 7 gezeigt, kann mindestens einer der Krafteingänge 25 doppelt ausgeführt sein, so dass vorzugsweise in axialer Richtung des Loches 3 zwei Krafteingänge 25 vorhanden sind, womit der im Loch 3 eingesetzte Teil der Kraftmessvorrichtung gegen Verdrehen gesichert ist.

Das Ausführungsbeispiel gemäss Fig. 8 weist - wie jenes nach Fig. 5 - ein Parallelogramm aus vier Stäben 23 auf zur Kraftund Weg-Wandlung. Hier sind die Stäbe 23 jedoch nur mit je einem Biegegelenk 24 versehen und erzeugen damit selbst die vorgesehene Anpresskraft auf das Innere des Loches 3. Ferner trägt das Loch 3 zwei parallel zu seiner Achse verlaufende Nuten 42, die beispielsweise V-förmigen Querschnitt aufweisen mit einem Radius an der Spitze des V. In diese Nuten 42 greifen zwei Schneiden 43 als Krafteingänge - wiederum mit einem entsprechenden Radius - ein, wobei der Radius der Schneiden 43 kleiner ist, als jener der Nuten 42, wie allgemein aus dem Waagenbau bekannt. Die Vorrichtung nach Fig. 8 kann durch Einpressen in das Loch 3 eingesetzt werden, jedoch auch durch kraftloses Einschieben, wenn sie vorher mit einem geeigneten Werkzeug zusammengedrückt wird.

Die Messanordnung nach Fig. 9 kann als Variante zu jener gemäss Fig. 5 aufgefasst werden. Hier fehlt jedoch die Vorspann-Feder 11 gemäss Fig. 5. Ferner ist hier die Krafteinleitung in die Messanordnung anders gelöst: Parallel zur Achse des Loches 3 sind zwei stumpf endende Sackbohrungen angebracht, die mit dem Loch 3 verbunden sind, so dass zwei Nuten 44 entstehen. Am Ende jeder Nut 44 ist ein - hier nicht eingezeichnetes Gewinde für je eine Schraube 45 vorgesehen. Anstelle einer Krafteinleitung 25, wie bei den vorangehend beschriebenen Ausführungsbeispielen, ist hier eine Oese <6 vorgesehen, durch welche die Schraube 45 spielfrei eingesetzt werden kann.

Fig. 10 zeigt eine Vorzugsausführung einer Kapselung der Messanordnung 12. Da sie, allenfalls mit kleinen Aenderungen in der Dimensionierung, für alle Ausführungsbeispiele verwenden werden kann, ist die Messanordnung 12 nur angedeutet. Eine beispielsweise runde Scheibe 47 weist eine zentrale Oeffnung 48 auf, durch welche der Schwingsaiten-Messwandler 10 mit der Messanordnung 12 verbunden ist. Die Scheibe 47 ist seitlich an die Platte 2 - oder den Steg 2 - angelegt und von ihr durch ein Isolations- und Dichtelement 49, beispielsweise aus einem Elastomer, getrennt. Zwei erste Schrauben 50 gehen durch die Scheibe 47 und das Loch 3 hindurch und greifen auf der anderen Seite der Platte 2 in korrespondierende Gewinde in einer ersten Abdeckhaube 51. Diese stützt sich an der Platte 2 ebenfalls auf einem gleichen Isolations- und Dichtelement 49 ab. Eine zweite Abdeckhaube 52 ist mittels zweier weiterer Schrauben 53, die sie durchsetzen, an der Scheibe 47 festgeschraubt. Energie- und Datenleitungen werden beispielsweise durch - nicht dargestellte - Oeffnungen in der zweiten Abdeckhaube 52 geführt. Schmutz, Staub und Feuchtigkeit können so wirkungsvoll von Messanordnung 12 und Schwingsaiten-Messwandler 10 ferngehalten werden.

## Patentansprüche

1. Kraftmesszelle bestehend aus einer im wesentlichen ebenen und rechteckigen Platte (2), die durch die zu messende Kraft in dieser Ebene mit Deformationskräften beansprucht wird und die durch die, hinsichtlich dieser Kraft neutralen Faser, ein kreisrundes Loch (3) aufweist, dessen Achse senkrecht steht auf der Ebene der Platte (2) und in diesem Loch (3) eine Messanordnung (12) mit mindestens zwei Krafteingängen (13, 14, 25, 47) trägt, wobei die Platte (2) längs einer ihrer zur Richtung der zu messenden Kraft parallelen Kante in einer Basis (1) eingespannt ist, **dadurch gekennzeichnet dass**,
- das Loch (3) zwischen der genannten Kante und dem Angriffspunkt der zu messenden Kraft liegt, womit der Bereich des Loches (3) im Wesentlichen nur mit Scherkräften beansprucht wird
- die genannte Messanordnung einen Schwingsaiten-Messwandler (10) enthält,
- die Wandung des Loches (3) an mindestens zwei Stellen so ausgebildet ist, dass die Krafteingänge (13, 14, 25, 47) des Schwingsaiten-Messwandlers (10) lageschlüssig eingesetzt werden können und durch eine Vorspannkraft ein Kraftschluss bewirkt werden kann,
- der Schwingsaiten-Messwandler (10) so in das Loch (3) eingesetzt ist, dass die auf ihn wirkende Kraft in einem Winkel von im wesentlichen 45° zur Richtung der zu messenden Kraft steht.

2. Kraftmesszelle nach Patentanspruch 1, **dadurch gekennzeichnet, dass** die Platte (2) zusätzlich zum ersten Loch (3) mindesten ein weiteres kreisrundes Loch (5) trägt, welches in der Richtung der zu messenden Kraft benachbart zum genannten ersten Loch (3) angeordnet ist.

3. Kraftmesszelle nach Patentanspruch 1 oder 2, **dadurch gekennzeichnet, dass** die Ausbildung der Wandung des Loches (3) zur lage- und kraftschlüssigen Aufnahme der Messanordnung (12) aus zwei einander gegenüberliegenden kugelkalottenförmigen Vertiefungen (22) besteht.

4. Kraftmesszelle nach Patentanspruch 1 oder 2, **dadurch gekennzeichnet, dass** die Ausbildung der Wandung des Loches (3) zur lage- und kraftschlüssigen Aufnahme der Messanordnung (12) aus drei einander gegenüberliegenden kugelkalottenförmigen Vertiefungen (22) besteht, wobei zwei dieser Vertiefungen (22) auf derselben Mantellinie des Loches (3) liegen.

5. Kraftmesszelle nach Patentanspruch 1 oder 2, **dadurch gekennzeichnet, dass** die Ausbildung der Wandung aus zwei V-förmigen Nuten (42) mit gerundeter Vertiefung besteht, welche einander gegenüberliegend parallel zur Achse des Loches (3) verlaufen.

6. Kraftmesszelle nach Patentanspruch 1 oder 2, **dadurch gekennzeichnet, dass** die Ausbildung der Wandung aus zwei Nuten (44) mit im wesentlichen rundem Querschnitt besteht, welche einander gegenüberliegend parallel zur Achse des Loches (3) verlaufen und von diesem angeschnitten sind, ferner im wesentlichen so lang sind, wie die halbe Dicke der Platte (2) und an ihren stumpfen Enden je ein zur Achse der Nut (44) koaxiales Gewinde aufweisen.

7. Kraftmesszelle nach einem der Patentansprüche 3 bis 6, **dadurch gekennzeichnet, dass** der Schwingsaiten-Messwandler (10) die Krafteingänge (13, 14) aufweist, die so ausgestaltet sind, dass sie lageschlüssig in die Ausbildung der Wandung des Loches (3) eingesetzt werden können.

8. Kraftmesszelle nach Patentanspruch 7, **dadurch gekennzeichnet, dass** eine Vorspannfeder (11) vorhanden ist, welche die Krafteingänge 13, 14) in die Ausbildung der Wandung des Loches (3) drückt.

9. Kraftmesszelle nach einem der Patentansprüche 3 bis 6, **dadurch gekennzeichnet, dass** Uebertragungsmittel vorhanden sind, die den zu messenden Deformationsweg des ersten Loches (3) auf den ausserhalb des ersten Loches (3) angeordneten Schwingsaiten-Messwandler (10) übertragen.

10. Kraftmesszelle nach Patentanspruch 9, **dadurch gekennzeichnet, dass**
- die Uebertragungsmittel aus einer Spange (30) mit zwei Schenkeln (31) bestehen, wobei jeder Schenkel mindestens einen Krafteingang (25) aufweist, welcher in eine entsprechende Ausbildung der Wandung des Loches (3) im ersten Loch (3) eingreifen kann,
- die Schenkel (31) der Spange (30) an deren Enden so ausgebildet sind, dass sie den Schwingsaiten-Messwandler (10) aufnehmen können.

11. Kraftmesszelle nach Patentanspruch 9, **dadurch gekennzeichnet, dass**
- die Uebertragungsmittel aus einem aus vier Stäben (23) gebildeten Parallelogramm bestehen, wobei die Stäbe (23) mit je einem Biegegelenk (24) mit den zwei Krafteingängen (25) verbunden sind,
- je zwei Stäbe (23) mittels Biegegelenken (24) mit einem ersten Knoten (26) und einem zweiten Knoten (27) verbunden sind,
- die Kraft und Bewegung des ersten Knotens (26) über eine Stange (28), die Kraft und Bewegung des zweiten Knotens (27) direkt an den Schwingsaiten-Messwandler (10) übertragen wird.

12. Kraftmesszelle nach Patentanspruch 9, **dadurch gekennzeichnet, dass**
- die Uebertragungsmittel aus einem in das erste Loch (3) einsetzbaren Einsatz (32) mit mindestens zwei Krafteingängen (25) bestehen, wobei der Einsatz (32) ein erstes Biegegelenk (35) aufweist, an welchem der eine Krafteingang (25) angelenkt ist,
- an den zwei einander im ersten Loch (3) gegenüberliegenden Krafteingängen (25) je ein Stab (23) mit einem Eiegegelenk angeschlossen ist, die beiden anderen Enden der Stäbe (23) mittels je eines weiteren Biegegelenkes einen Knoten (33) tragen ,
- die Achsen der beiden Stäbe (23) miteinander einen Winkel zwischen 90° und 180° bilden.
- der hintere Knoten (33) mittels einer in der Winkelhalbierenden der Achsen der Stäbe (23) liegenden Stange (36) mit einem der Krafteingänge (13, 14) des Schwingsaiten-Messwandlers (10) verbunden ist, während der andere direkt mit dem Einsatz (32) verbunden ist,
- der Einsatz ferner einen am ersten Biegegelenk (35) befestigten Hebel (34) aufweist, der eine im wesentlichen senkrecht zur Achse des Hebels (34) verlaufende Bohrung (40) aufweist, der Einsatz (32) ferner ein koaxial zu dieser Bohrung (40) angebrachtes Gewinde trägt, so dass eine Schraube (41) durch die Bohrung (40) in das Gewinde (39) eingesetzt werden kann, mit deren Hilfe die Spannung des Hebels (34) und damit die Anpresskraft der Krafteingänge (25) auf die Vertiefungen (22) eingestellt werden kann.

13. Kraftmesszelle nach Patentanspruch 6, **dadurch gekennzeichnet, dass**
- Uebertragungsmittel vorhanden sind, die den zu messenden Deformationsweg des ersten Loches (3) auf den ausserhalb des ersten Loches (3) angeordneten Schwingsaiten-Messwandler (10) übertragen.
- die Uebertragungsmittel aus einem aus vier Stäben (23) gebildeten Parallelogramm bestehen, wobei die Stäbe (23) mit je einem Biegegelenk (24) mit den zwei Krafteingängen (25) verbunden sind,
- je zwei Stäbe (23) mittels Biegegelenken (24) mit einem ersten Knoten (26) und einem zweiten Knoten (27) verbunden sind,
- die Kraft und Bewegung des ersten Knotens (26) über eine Stange (28), die Kraft und Bewegung des zweiten Knotens (27) direkt an den Schwingsaiten-Messwandler (10) übertragen wird.
- die Krafteingänge (25) je mit einer Oese (46) versehen sind zur Aufnahme einer Schraube (41), welche im Gewinde festgezogen werden kann, welches am stumpfen Ende der Nut (44) vorhanden ist.

14. Kraftmesszelle nach Patentanspruch 1, **dadurch gekennzeichnet, dass** die Platte (2) der Steg eines Trägers ist.

15. Kraftmesszelle nach Patentanspruch 14, **dadurch gekennzeichnet, dass** der Träger beidseitig in einem Gestell (1) eingespannt ist.

16. Kraftmesszelle nach Patentanspruch 14, **dadurch gekennzeichnet, dass** der Träger einseitig in einem Gestell (1) eingespannt ist, auf seiner freien Seite auf einem Gestell (1) lediglich aufliegt.

17. Kraftmesszelle nach einem der Patentansprüche 1 bis 16, **dadurch gekennzeichnet,**
- **dass** die Messanordnung (12) eine Kapselung aufweist, welche besteht aus einer ersten und einer zweiten Abdeckhaube (51, 52), einer Scheibe (47) mit einer zentralen Oeffnung (48) und zwei Löchern, zwei Isolations- und Dichtelementen (49), zwei ersten und zwei weiteren Schrauben (50, 53),
- die Käpselung so aufgebaut ist, dass
- die Scheibe (47), auf dem ersten Isolations- und Dichtelement (49) liegend, auf der einen Seite der Platte (2) so angelegt wird, dass ihre zentrale Oeffnung (48) konzentrisch auf das Loch (3) in der Platte (2) zu liegen kommt,
- die zwei ersten Schrauben (50) durch die Löcher in der Scheibe (47) durchgesteckt werden, so dass sie in je ein Gewinde in der ersten Abdeckhaube (51) eingreifen können, welche über ein zweites Isolations- und Dichtelement (49) an der anderen Seite der Platte (2) anliegt, und die zwei ersten Schrauben (50) die Scheibe (47) und die erste Abdeckhaube (51) von je einer Seite gegen die Platte (2) drücken,
- die zweite Abdeckhaube (52) mit den zwei weiteren Schrauben (53) in Gewinden in der Scheibe (47) angeschraubt werden kann, wobei die weiteren on Schrauben (53) die zweite Abdeckhaube (52) durchsetzen, und die zweite Abdeckhaube (52) ebenfalls gegen das erste Isolations- und Dichtelement (49) drückt.

## Claims

1. A force measuring cell comprising an essentially level and rectangular plate (2), which is loaded with the deformation force to be measured in the plane of this plate (2) and which has a circular hole (3) through the neutral surface with respect to this force, whose axis is perpendicular to the plane of the plate (2) and in this hole (3) a measuring transducer (12) is carried with at least two force inputs (13, 14, 25, 47), whereby the said plate (2) is clamped into a base (1) along its edge parallel to the direction of the force to be measured, **characterised in that**,
- the hole (3) lies between the said edge and the impact point of the force to be measured, whereby the region of the hole (3) is essentially loaded in shear only,
- the said measurement transducer includes an oscillating string measuring transformer (10),
- the wall of the hole (3) is formed in at least two positions such that the force inputs (13, 14, 25, 47) of the oscillating string measuring transformer (10) can be inserted and locked in position and a gripping force can be exerted by a pre-tensioning force,
- the oscillating string measuring transformer (10) is clamped in the hole (3) such that the force acting on it is essentially at 45° to the direction of the force to be measured.

2. A force measuring cell in accordance with Claim 1, **characterised in that** the plate (2) carries, in addition to the first hole (3), at least one further circular hole (5), which is arranged adjacent to the said first hole (3) in the direction of the force to be measured.

3. A force measuring cell in accordance with Claim 1 or Claim 2, **characterised in that** the formation of the wall of the hole (3) for the positional and gripping force acceptance of the measuring transducer (12) includes two hemispherical cup-shaped recesses (22) positioned opposite to each other.

4. A force measuring cell in accordance with Claim 1 or Claim 2, **characterised in that** the formation of the wall of the hole (3) for the positional and gripping force acceptance of the measuring transducer (12) includes three hemispherical cup-shaped recesses (22) positioned opposite to each other, whereby two of these recesses (22) lie on the same surface line of the hole (3).

5. A force measuring cell in accordance with Claim 1 or Claim 2, **characterised in that** the formation of the wall includes two V-shaped grooves (42) with rounded recesses, which run opposite to each other parallel to the axis of the hole (3).

6. A force measuring cell in accordance with Claim 1 or Claim 2, **characterised in that** the formation of the wall includes two grooves (44) with essentially round cross section, which run opposite to each other parallel to the axis of the hole (3) and are cut out from it, are further as long as half the thickness of the plate (2) and at their butt ends each has a thread coaxial with the axis of the groove (44).

7. A force measuring cell in accordance with one of the Claims 3 to 6, **characterised in that** the oscillating string measuring transformer (10) has force inputs (13, 14), which are configured such that they can be locked into position in the formation of the wall of the hole (3).

8. A force measuring cell according to Claim 7,
**characterised in that** a pre-loaded spring (11) is present, which presses the force inputs (13, 14) into the formation of the wall of the hole (3).

9. A force measuring cell in accordance with one of the Claims 3 to 6, **characterised in that** means of transmission are available, to transmit the deformation displacement of the first hole (3), to be measured, to the oscillating string measuring transformer (10) arranged outside the first hole (3).

10. A force measuring cell according to Claim 9, **characterised in that**
- the means of transmission comprise a rod (30) with two arms (31), whereby each arm has at least one force input (25), which can engage into a suitable formation of the hole (3), in the first hole (3),
- the arms (31) of the rod (30) are formed at their ends such that they can accept the oscillating string measuring transformer (10).

11. A force measuring cell according to Claim 9, **characterised in that**
- the transmission means comprise a parallelogram formed from four rods (23), whereby the rods (23) are each joined by a bending link (24) to the two force inputs (25),
- each two rods (23) are joined to a first hub (26)and a second hub (27) by means of bending links (24),
- the force and movement of the first hub (26) is transmitted by a rod (28), the force and movement of the second hub (27) is transmitted directly to the oscillating string measuring transformer (10).

12. A force measuring cell according to Claim 9, **characterised in that**
- the means of transmission comprise an insert (32) which can be clamped into the first hole (3) with at least two force inputs (25), whereby the insert (32) has a first bending link (35), onto which the one force input (25) is linked,
- onto each of the two force inputs (25) lying opposite to each other in the first hole (3), a rod (23) is linked in each case by a bending link, the two other ends of the rods (23) carry a hub (33) by means of a further bending link in each case,
- the axes of the two rods (23) form an angle between 90° and 180°,
- the rear hub (33) is joined by means of a rod (36) lying in the bisecting angle of the axes of the rods (23) to one of the force inputs (13, 14) of the oscillating string measuring transformer (10), whilst the other is joined directly to the insert (32),
- the insert has further a lever (34) fastened to the first bending link (35), which has a boring (40) running essentially perpendicular to the axis of the lever (34), the insert (32) carries further a thread applied coaxially with this boring, so that a screw (41) can be inserted through the boring (40) into the thread (39), with the aid of which the tension of the lever (34) and thus the contact force of the force inputs (25) on the recesses (22) can be adjusted.

13. A force measuring cell according to Claim 6, **characterised in that**
- means of transmission are present, which transmit the deformation displacement of the first hole (3), to be measured, onto the oscillating string measuring transformer (10) arranged outside the first hole (3),
- the transmission means comprise a parallelogram formed from four rods (23), whereby the rods (23) are each connected by a bending link (24) to the two force inputs (25),
- each two rods (23) are connected by means of bending links (24) with a first hub (26) and a second hub (27),
- the force and the movement of the first hub (26) are transmitted via a rod (28), the force and the movement of the second hub (27) directly, to the oscillating string measuring transformer (10),
- the force inputs (25) are provided with a grommet (46) for the acceptance of a screw (41), which can be tightened in the thread, which is present at the blind end of the groove (44).

14. A force measuring cell according to Claim 1, **characterised in that** the plate (2) is the web of a carrier.

15. A force measuring cell according to Claim 14, **characterised in that** the carrier is clamped on both sides in a frame (1).

16. A force measuring cell according to Claim 14, **characterised in that** the carrier is clamped on one side, on its free side it only lies upon a frame (1).

17. A force measuring cell in accordance with one of the Claims 1 to 16, **characterised in that**
- the measuring transducer (12) has an enclosure, which comprises a first and a second covering cap (51, 52), a disc (47) with a central opening (48) and two holes, two isolating and sealing elements (49), two first and two further screws (50, 53),
- the enclosure is constructed such that the disc (47), lying on the first isolating and sealing element (49), on the one side of the plate (2) is designed such that its central opening (48) comes to lie concentrically over the hole (3) in the plate (2),
- the two first screws (50) are inserted through the holes in the disc (47), so that they each can engage in a thread in the first cover cap (51), which lies on a second isolating and sealing element (49) on the other side of the plate (2), and the two first screws (50) press the disc (47) and the first cover cap against the plate (2),
- the second cover cap (52) with the two further screws (53) can be screwed on in threads in the disc (47), whereby the further screws (53) penetrate the second cover cap (52) and press the second cover cap (52) similarly against the first isolation and sealing element (49).

## Revendications

1. Cellule dynamométrique composée d'une plaque (2) essentiellement plane et rectangulaire, laquelle est soumise à des forces de déformation produites par la force à mesurer dans ce plan et laquelle présente un trou rond (3) à travers les fibres neutres du point de vue de cette force, dont l'axe est perpendiculaire au plan de la plaque (2) et comporte dans ce trou (3) un arrangement de mesure (12) muni d'au moins deux entrées de force (13, 14, 25, 47), la plaque (2) étant fixée dans une base (1) le long de l'un de ses bords parallèles à la direction de la force à mesurer, **caractérisée en ce que**
- le trou (3) se trouve entre ledit bord et le point d'application de la force à mesurer, ce qui a pour effet que la zone du trou (3) n'est pour l'essentiel soumise qu'à des forces de cisaillement,
- ledit arrangement de mesure contient un transducteur de mesure à corde vibrante (10),
- la paroi du trou (3) est configurée en au moins deux endroits de telle sorte que les entrées de force (13, 14, 25, 47) du transducteur de mesure à corde vibrante (10) peuvent être insérées dans leur position définitive et une adhérence peut être obtenue par une force de précontrainte,
- le transducteur de mesure à corde vibrante (10) est inséré dans le trou (3) de telle sorte que la force qui agit sur celui-ci se trouve à un angle d'essentiellement 45° par rapport à la direction de la force à mesurer.

2. Cellule dynamométrique selon la revendication 1, **caractérisée en ce que** la plaque (2), en plus du premier trou (3), comporte au moins un trou (5) rond supplémentaire qui est disposé à côté dudit premier trou (3) dans la direction de la force à mesurer.

3. Cellule dynamométrique selon la revendication 1 ou 2, **caractérisée en ce que** la configuration de la paroi du trou (3) en vue du logement par positionnement et par adhérence de l'arrangement de mesure (12) se compose de deux enfoncements (22) en forme de calotte sphérique opposés l'un à l'autre.

4. Cellule dynamométrique selon la revendication 1 ou 2, **caractérisée en ce que** la configuration du trou (3) en vue du logement par positionnement et par adhérence de l'arrangement de mesure (12) se compose de trois enfoncements (22) en forme de calotte sphérique opposés l'un à l'autre, deux de ces enfoncements (22) se trouvant dans la même ligne d'enveloppe du trou (3).

5. Cellule dynamométrique selon la revendication 1 ou 2, **caractérisée en ce que** la configuration de la paroi se compose de deux rainures en forme de V (42) qui sont opposées l'une à l'autre et s'étendent parallèlement à l'axe du trou (3).

6. Cellule dynamométrique selon la revendication 1 ou 2, **caractérisée en ce que** la configuration de la paroi se compose de deux rainures (44) ayant une section transversale essentiellement ronde, lesquelles s'étendent parallèlement à l'axe du trou (3) en étant opposées l'une à l'autre et sont taillées dans celui-ci, de plus qui sont pour l'essentiel aussi longues que la demi-épaisseur de la plaque (2) et présentent à leurs extrémités tronconiques à chaque fois un filet coaxial par rapport à l'axe de la rainure (44).

7. Cellule dynamométrique selon l'une des revendications 3 à 6, **caractérisée en ce que** le transducteur de mesure à corde vibrante (10) présente les entrées de force (13, 14) qui sont configurées de telle sorte qu'elles puissent être insérées dans leur position définitive dans la configuration de la paroi du trou (3).

8. Cellule dynamométrique selon la revendication 7, **caractérisée en ce qu'**il existe un ressort de précontrainte (11) qui pousse les entrées de force (13, 14) dans la configuration de la paroi du trou (3).

9. Cellule dynamométrique selon l'une des revendications 3 à 6, **caractérisée en ce qu'**il existe des moyens de transmission qui transmettent la course de déformation à mesurer du premier trou (3) au transducteur de mesure à corde vibrante (10) disposé à l'extérieur du premier trou (3).

10. Cellule dynamométrique selon la revendication 9, **caractérisée en ce que**
- les moyens de transmission se composent d'une boucle (30) munie de deux branches (31), chaque branche présentant au moins une entrée de force (25) qui peut pénétrer dans une configuration correspondante de la paroi du trou (3) dans le premier trou (3),
- les branches (31) de la boucle (30) sont configurées à leurs extrémités de telle sorte qu'elles puissent recevoir le transducteur de mesure à corde vibrante (10).

11. Cellule dynamométrique selon la revendication 9, **caractérisée en ce que**
- les moyens de transmission se composent d'un parallélogramme formé par quatre tiges (23), les tiges (23) étant reliées avec les deux entrées de force (25) à chaque fois avec un joint articulé de flexion (24),
- deux tiges (23) sont reliées au moyen de deux joints articulés de flexion (24) avec un premier noeud (26) et un deuxième noeud (27),
- la force et le mouvement du premier noeud (26) sont transmis au transducteur de mesure à corde vibrante (10) par le biais d'une tige (28) et la force et le mouvement du deuxième noeud (27) sont transmis directement.

12. Cellule dynamométrique selon la revendication 9, **caractérisée en ce que**
- les moyens de transmission se composent d'un insert (32) comprenant au moins deux entrées de force (25) et pouvant être inséré dans le trou (3), l'insert (32) présentant un premier joint articulé de flexion (35) auquel est articulée la première entrée de force (25),
- aux deux entrées de force (25) opposées l'une à l'autre dans le premier trou (3) est à chaque fois raccordée une tige (23) munie d'un joint articulé de flexion, les deux autres extrémités des tiges (23) portent un noeud (33) à chaque fois au moyen d'un joint articulé de flexion supplémentaire,
- les axes des deux tiges (23) forment entre eux un angle compris entre 90° et 180°,
- le noeud arrière (33) est relié avec l'une des entrées de force (13, 14) du transducteur de measure à corde vibrante (10) au moyen d'une tige (36) qui se trouve dans la bissectrice des axes des tiges (23), alors que l'autre est reliée directement avec l'insert (32),
- l'insert présente en plus un levier (34) fixé au premier joint articulé de flexion (35), lequel présente un orifice (40) qui s'étend pour l'essentiel perpendiculairement à l'axe du levier (34), l'insert (32) comporte en plus un filet coaxial par rapport à cet orifice (40) de manière à ce qu'une vis (41) puisse être introduite dans le filet (39) à travers l'orifice (40), laquelle permet de régler la tension du levier (34) et ainsi la force de compression des entrées de force (25) sur les enfoncements (22).

13. Cellule dynamométrique selon la revendication 6, **caractérisée en ce que**
- il existe des moyens de transmission qui transmettent la course de déformation du premier trou (3) au transducteur de mesure à corde vibrante (10) disposé à l'extérieur du premier trou (3),
- les moyens de transmission se composent d'un parallélogramme formé par quatre tiges (23), les tiges (23) étant reliées avec les entrées de force (25) à chaque fois avec un joint articulé de flexion (24),
- deux tiges (23) sont à chaque fois reliées à un premier noeud (26) et à un deuxième noeud (27) au moyen de joints articulés de flexion (24),
- la force et le mouvement du premier noeud (26) sont transmis au transducteur de mesure à corde vibrante (10) par une tige (28), la force et le mouvement du deuxième noeud (27) sont transmis directement,
- les entrées de force (25) sont chacune munies d'un oeillet (46) pour recevoir une vis (41) qui peut être serrée dans le filet présent à l'extrémité tronconique de la rainure (44).

14. Cellule dynamométrique selon la revendication 1, **caractérisée en ce que** la plaque (2) de la traverse est un support.

15. Cellule dynamométrique selon la revendication 14, **caractérisée en ce que** le support est fixé des deux côtés dans un bâti (1).

16. Cellule dynamométrique selon la revendication 14, **caractérisée en ce que** le support est fixé d'un côté dans un bâti (1) et son côté libre repose seulement sur le bâti (1).

17. Cellule dynamométrique selon l'une des revendications 1 à 16, **caractérisée en ce que**
- l'arrangement de mesure (12) présente un capot qui se compose d'un premier et d'un deuxième capot de protection (51, 52), d'un disque (47) muni d'une ouverture centrale (48) et de deux trous, de deux éléments d'isolation et d'étanchéité (49), de deux premières vis et de deux vis supplémentaires (50, 53),
- le capot est construit de telle sorte que
- le disque (47) est appliqué sur l'un des côtés de la plaque (2) en reposant sur le premier élément d'isolation et d'étanchéité (49) de sorte que son ouverture centrale (48) repose sur la plaque (2) en étant centrée par rapport au trou (3),
- les deux premières vis (50) sont insérées à travers les trous dans le disque (47) de sorte qu'elles puissent pénétrer à chaque fois dans un filet dans le premier capot de protection (51), lequel repose de l'autre côté de la plaque (2) par le biais d'un deuxième élément d'isolation et d'étanchéité (49) et les deux premières vis (50) compriment le disque (47) et le premier capot de protection (51) contre la plaque (2) à chaque fois depuis un côté,
- le deuxième capot de protection (52) peut être fixé avec les deux autres vis (53) dans les filets dans le disque (47), les autres vis (53) traversant le deuxième capot de protection (52) et le deuxième capot de protection (52) étant également comprimé contre le premier élément d'isolation et d'étanchéité (49).
